# EUROPÄISCHE PATENTSCHRIFT

(11) **EP 1 479 219 B1**
(45) Veröffentlichungstag und Bekanntmachung des Hinweises auf die Patenterteilung: **17.10.2012**
(21) Anmeldenummer: 03717109.7
(22) Anmeldetag: 22.02.2003
(51) Int. Cl.: H04N 1/409, H04N 5/335

(54) **VERFAHREN ZUR SIGNALAUSWERTUNG EINES ELEKTRONISCHEN BILDSENSORS**
METHOD FOR EVALUATING THE SIGNALS OF AN ELECTRONIC IMAGE SENSOR
PROCEDE PERMETTANT D'EVALUER LES SIGNAUX D'UN CAPTEUR D'IMAGE ELECTRONIQUE

(30) Priorität: 26.02.2002 DE 10208290
(43) Veröffentlichungstag der Anmeldung: 24.11.2004
(73) Patentinhaber: Koenig & Bauer Aktiengesellschaft, 97080 Würzburg (DE)
(72) Erfinder: STÖBER, Bernd, Rüdiger, 33378 Rheda-Wiedenbrück (DE)
(86) Internationale Anmeldenummer: PCT/DE2003/000571
(87) Internationale Veröffentlichungsnummer: WO 2003/073747

(56) Entgegenhaltungen:
- EP-A- 0 506 380

## Beschreibung

Die Erfindung betrifft ein Verfahren zur Signalauswertung eines elektronischen Bildsensors gemäß dem Oberbegriff des Anspruchs 1.

Bekannte elektronische Bildsensoren, beispielsweise CCD-Sensoren, wie sie in Digitalkameras üblich sind, weisen eine Oberfläche mit einer Vielzahl von lichtempfindlichen Zellen, sogenannten Pixel, auf. Trifft auf einen solchen Pixel ein Lichteingangssignal auf, so wird von dem Pixel ein elektrisches Ausgangssignal, beispielsweise eine bestimmte elektrische Spannung, dessen Stärke mit dem Lichtsignal korreliert, ausgegeben. Die elektrischen Ausgangssignale können dann in einer nachgeordneten Auswerteeinheit als Bildinformation ausgewertet werden, wobei die Bildauflösung im wesentlichen von der Anzahl der Pixel abhängt.

Ein Problem der Signalauswertung bekannter elektronischer Bildsensoren ist es, dass je nach Signal-/Rausch-Verhältnis der im Bildsensor vorhandenen Pixel, d. h. dem Verhältnis zwischen dem durch das Lichteingangssignal ausgelösten elektrischen Ausgangssignal und dem bauartbedingten Signalrauschen, entsprechend empfindliche Auswerteelektroniken erforderlich sind. Zur Verbesserung des Signal-/Rausch-Verhältnisses ist bei CCD-Sensoren das sogenannte "Binning"-Verfahren bekannt. Bei diesem Verfahren werden mehrere jeweils zueinander horizontal und/oder vertikal zueinander benachbarte Pixel zu einer logischen Pixeleinheit zusammengefasst, wobei die Ausgangssignale der einzelnen Pixel einer Pixeleinheit auf dem Bildsensor selbst, z. B. in den Schieberegistem, akkumuliert werden. Das Ausgangssignalniveau der Pixeleinheit kann dadurch für kleine Signalpegel vervielfacht und weit über das Niveau des Signalrauschens angehoben werden.

Außerdem kann durch die Auswertung der Ausgangssignale der Pixeleinheiten die auszuwertende Datenmenge signifikant reduziert werden, so dass auch die Bildfrequenz erhöht werden kann. Durch das Binning, d. h. das Zusammenfassen der Bildinformationen benachbarter Pixel zu einer durchschnittlichen Bildinformation der Pixeleinheit, wird also der Signal-/Rauschabstand für geringe Signalpegel verbessert, was jedoch eine Verringerung der Auflösung zur Folge hat.

Ein entscheidender Nachteil des Binning ist es, dass kleine Bildobjekte, die sich in ihren Bildeigenschaften signifikant von ihrer Umgebung abheben, durch die Zusammenfassung der Bildinformationen in den Pixeleinheiten nicht erkennbar sind.

Zudem ist die maximal mögliche Anzahl der nutzbaren Photoelektronen für eine zusammengefasste Pixeleinheit beim Binning durch die Struktur des Schieberegisters, welches weitgehend an die maximale Ladungsmenge eines Pixels angepasst ist, beschränkt und bietet dementsprechend gegenüber einem gut ausgesteuerten Bildsensor (Signal nah an dem maximal möglichen Signalpegel) keinen wesentlichen Signalqualitätsvorsprung, sonder nur eine höhere Lichtempfindlichkeit.

Aus der WO 97/28641 A1 ist ein Bildsensor bekannt, der mit verschiedenen Auflösungen detektiert. Bei dem Bildsensor werden mehrere Bildsensorelemente (Pixel) zu einer Pixelgruppe zusammen gefasst, ein Mittelwert der Ausgangssignale aus den einzelnen Pixels einer Pixelgruppe erfasst und als Ausgangssignal der Pixelgruppe weiter verarbeitet. Darüber hinaus wird ein Dunkelstrom für die Pixelgruppe ermittelt, der das Ausgangssignal korrigiert.

Aus der EP 0 632 652 B1 ist ein Farbbildsensor bekannt, der Objekte mit verschiedener Auflösung erfassen kann. Der Bildsensor mittelt über mehrere Farbpixel und liefert den Mittelwert als Ausgangssignal.

Aus der JP 09-006954 AA ist ein Verfahren zum Erkennen kontrastarmer Defekte auf Objekten bekannt. Bei diesem Verfahren wird ein Schwellwert hinsichtlich der Häufung von kontrastarmen Punkten verwendet.

Die EP 0 506 380 A2 offenbart ein Verfahren zur Signalauswertung einer Bildverarbeitungseinrichtung. Dabei wird aus Signalen von vier Pixeln ein Mittelwert gebildet.

Der Erfindung liegt die Aufgabe zugrunde, ein Verfahren zur Signalauswertung eines elektronischen Bildsensors zu schaffen.

Die Aufgabe wird erfindungsgemäß durch die Merkmale des Anspruchs 1 gelöst.

Ein mit der Erfindung erzielbarer Vorteil liegt insbesondere darin, dass trotz der signifikanten Reduktion der auszuwertenden Bilddaten durch Zusammenfassung der Bildinformationen einzelner Pixel in Pixeleinheiten sehr kontrastreiche Bilder abgebildet werden können.

Ein weiterer Vorteil des erfindungsgemäßen Verfahrens liegt in einer Verbesserung des Signal-/Rausch-Verhältnisses für den gesamten Aussteuerbereich eines Pixels.

Dies gelingt dadurch, dass einer Pixeleinheit abhängig von den Kontrastunterschieden des aufgenommenen Objektbereiches unterschiedliche Ausgangssignale als Bildinformation zugeordnet werden. Dazu werden zunächst aus den Ausgangssignalen aller Pixel einer Pixeleinheit der Signaldurchschnitt ermittelt, der einen Ausgangssignalmittelwert darstellt. Um diesen Ausgangssignalmittelwert wird dann ein Toleranzband gelegt, das den Erwartungsbereich für das normale, z. B. bauartbedingte, Signalrauschen bei der entsprechenden Signalstärke repräsentiert. Diese Signaltoleranz kann z. B. als Festwert oder als Funktion in Abhängigkeit des Ausgangssignalmittelwertes
vorgegeben werden. Die Ausgangssignale der einzelnen Pixel werden dann mit dem Ausgangssignalmittelwert verglichen. Wenn alle Ausgangssignalwerte der einzelnen Pixel innerhalb des vorgegebenen Toleranzbandes um den Ausgangssignalmittelwert liegen, so kann daraus geschlossen werden, dass in dem entsprechenden Aufnahmebereich keine signifikanten Kontrastunterschiede vorhanden sind, so dass dieser Bildbereich durch den Ausgangssignalmittelwert als im wesentlichen zutreffende Bildinformation repräsentiert wird. Durch diese außerhalb des eigentlichen Bildsensors stattfindende Mittelung wird das Signal-/Rausch-Verhältniss für jeden Signalpegel der Pixel verbessert.

Sind in dem entsprechend aufgenommenen Bildbereich jedoch kontraststarke Strukturfehler vorhanden, so führt dies dazu, dass zumindest das Ausgangssignal eines Pixels stark von den Ausgangssignalen der benachbarten Pixel abweicht. Ist der Kontrastunterschied so stark, dass das Ausgangssignal des entsprechenden Pixels außerhalb des Toleranzbandes um den Ausgangssignalmittelwert liegt, so wird der gesamten Pixeleinheit zur Auswertung in der Auswerteeinrichtung das Ausgangssignal mit der größten Differenz zum Ausgangssignalmittelwert zugeordnet.

Mit anderen Worten bedeutet dies, dass zwar die Bildauflösung durch die Zusammenfassung der Bildinformationen der einzelnen Pixel in Pixeleinheiten verringert wird, dabei jedoch signifikante Kontrastunterschiede, deren Ausdehnung unterhalb der durch die Pixeleinheiten auflösbaren Auflösung liegt, erkannt werden können.

Ein mögliches Hauptanwendungsgebiet des erfindungsgemäßen Verfahrens ist die Inspektion von Druckerzeugnissen, beispielsweise Banknoten, oder Farbregelung von Druckerzeugnissen.

Ausführungsbeispiele der Erfindung sind in den Zeichnungen dargestellt und werden im folgenden näher beschrieben.

Es zeigen:
- Fig. 1.: den schematischen Aufbau eines elektronischen Bildsensors mit einer Signalauswertung;
- Fig. 2.: ein Diagramm der Ausgangssignale der in Fig. 1 dargestellten Pixeleinheiten P1, P2 und P3.

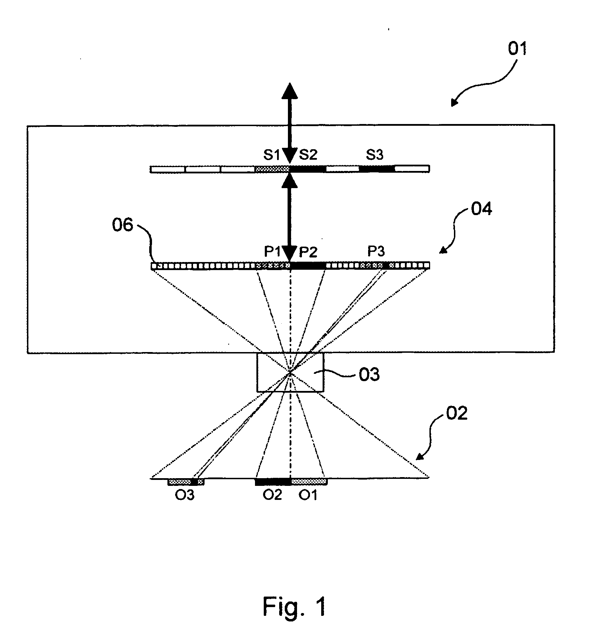

Mit einer schematisch dargestellten Kamera 01 wird wie in Fig. 1 dargestellt ein flächiges Objekt 02, beispielsweise eine bedruckte Papierbahn, aufgenommen. Mittels einer Optik 03 werden die verschiedenen Bereiche des Objekts 02 auf einen Bildsensor 04 abgebildet.

Der Bildsensor 04 ist in der Art eines Zeilensensors ausgebildet, der von einer Vielzahl von in einer Zeile nebeneinander angeordneten Pixel 06 gebildet wird. Ebenso kann der Bildsensor (04) als Flächensensor ausgebildet sein. In Abhängigkeit des jeweils von unten auf einen Pixel 06 einfallenden Lichtsignals, wird von den Pixel 06 jeweils ein elektrisches Ausgangssignal 07 ausgegeben. Bei diesem Ausgangssignal 07 kann es sich beispielsweise um eine elektrische Spannung handeln, die mit der Lichtstärke bzw. dem Grauwert des durch die Optik 03 abgebildeten Bereichs des Objekts 02, beispielsweise einem mit Banknoten bedruckten Druckbogen, korreliert.

Werden alle Ausgangssignale der Pixel 06 in der nachgeordneten Auswerteeinrichtung ausgewertet, ermöglicht dies zwar eine maximale Auflösung des aufgenommenen Bildes, erfordert jedoch zugleich eine sehr aufwendige Hardware, da jeder Pixel 06 nur einen relativ geringen Signal-/Rausch-Abstand aufweist und zudem aufgrund der großen Anzahl von Pixel 06 eine große Datenmenge anfällt. Aus diesem Grund werden jeweils mehrere nebeneinander angeordnete Pixel 06, beispielsweise wie in Fig. 1 dargestellt jeweils sechs benachbarte Pixel 06, zu Pixeleinheiten P1; P2; P3 zusammengefasst. Denkbar ist auch, dass im Bildsensor 04 jeweils mehrere Pixel mit jeweils unterschiedlicher Farbempfindlichkeit zu Farbpixeleinheiten zusammengefasst sind, wobei mehrere Farbpixeleinheiten wiederum eine Pixeleinheit (P1; P2; P3) bilden. In Fig. 1 sind beispielhaft die Pixeleinheiten P1; P2 und P3 dargestellt.

Aufgrund der relativen Anordnung der Pixeleinheiten P1; P2 und P3, werden auf diesen Pixeleinheiten P1; P2; P3 die Oberflächenbereiche O1; 02 und 03 des Objekts 02 durch die Optik 03 abgebildet.

Der Oberflächenbereich O1 stellt eine homogene Objektfläche mittleren Graus dar. Der Oberflächenbereich 02 stellt eine homogene schwarze Objektfläche dar. Der Oberflächenbereich 03 stellt eine homogene graue Objektfläche mit einem kleinen schwarzen Fleck dar, wobei dieser Fleck gerade so groß ist, das er von den Pixel 06 aufgrund ihres Auflösungsvermögens noch aufgelöst werden kann.

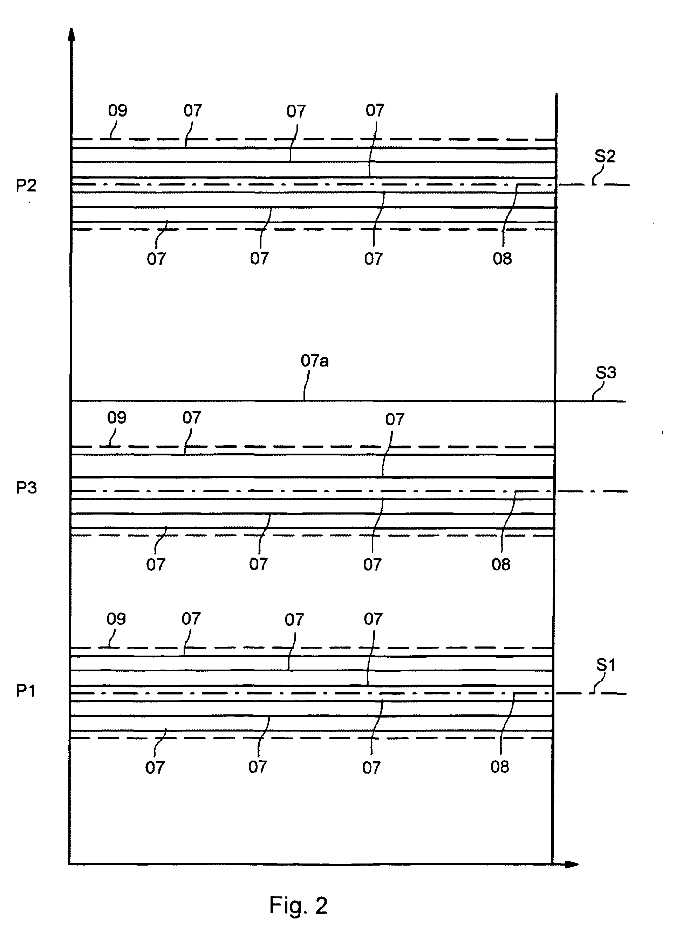

Die Signalauswertung in den Pixeleinheiten P1; P2 und P3 ist schematisch in dem in Fig. 2 dargestellten Diagramm ersichtlich. Aus den Ausgangssignalen 07 der einzelnen Pixel 06 wird ein Ausgangssignalmittelwert 08 für jede Pixeleinheit P1; P2 und P3 ermittelt. Um den Ausgangssignalmittelwert 08 wird für jede Pixeleinheit P1; P2; P3 ein Toleranzband definiert, das durch die Toleranzgrenzen 09 nach oben bzw. unten begrenzt wird. Durch das Toleranzband um den Ausgangssignalmittelwert 08 wird der Erwartungsbereich des normalen Signalrauschens, das bauartbedingt bei den verwendeten Pixel 06 auftritt repräsentiert. Bei der Auswertung der Bildinformationen in den verschiedenen Pixeleinheiten P1; P2; P3 wird nun differenziert nach den Kontrastunterschieden in den verschiedenen Oberflächenbereichen O1; 02 und 03 gefiltert. In den Oberflächenbereichen O1 und O2 ist jeweils eine relativ gleichmäßige, das heißt kontrastarme Grauwertverteilung vorhanden, so dass die Ausgangssignale 07 der einzelnen Pixel 06 in den Pixeleinheiten P1 und P2 jeweils innerhalb des Toleranzbandes um den Ausgangssignalmittelwert 08 liegen. Dementsprechend wird bei der Auswertung der Bildinformationen der Pixeleinheiten P1 und P2 der Ausgangssignalmittelwert 08 als weiterzuverarbeitendes Signal S1 bzw. S2 weitergegeben. Im Ergebnis wird dadurch eine Reduktion der auszuwertenden Bilddaten auf ein Sechstel erreicht, da sechs Ausgangssignale 07 der einzelnen Pixel 06 auf ein einziges Signal S1; S2; S3 abgebildet werden.

Aufgrund des schwarzen Flecks im Oberflächenbereich 03 gibt ein Pixel 06 der Pixeleinheit P3 ein Ausgangssignal 07a ab, das stark von den Ausgangssignalen 07 der anderen Pixel 06 in der Pixeleinheit P3 abweicht. Da das Ausgangssignal 07a oberhalb der Toleranzgrenze 09 um den Ausgangssignalmittelwert 08 der Pixeleinheit P3 liegt, wird der Pixeleinheit P3 bei der Auswertung der Bildinformationen in der Auswerteeinrichtung der Wert des Ausgangssignals 07a als weiterzuverarbeitendes Signal S3 zugeordnet. In der weiteren Bildauswertung würde deshalb der gesamte Oberflächenbereich 03 mit den Bildinformationen weiterverarbeitet und dargestellt werden, wie sie letztlich nur für kleine schwarze Flecken im Oberflächenbereich 03 gelten.

### Bezugszeichenliste

- 01: Kamera
- 02: aufzunehmendes Objekt
- 03: Optik
- 04: Bildsensor
- 05: -
- 06: Pixel
- 07: Ausgangssignal eines einzelnen Pixels
- 07a: abweichendes Ausgangssignal eines einzelnen Pixels
- 08: Ausgangssignalmittelwert
- 09: Toleranzgrenzen um den Ausgangssignalmittelwert, Signaltoleranz
- 10: -
- 01: erster Oberflächenbereich
- 02: zweiter Oberflächenbereich
- 03: dritter Oberflächenbereich

- P1: erste Pixeleinheit (sechs Pixel)
- P2: zweite Pixeleinheit (sechs Pixel)
- P3: dritte Pixeleinheit (sechs Pixel)

- S1: erstes Signal
- S2: zweites Signal
- S3: drittes Signal

## Patentansprüche

1. Verfahren zur Signalauswertung eines elektronischen Bildsensors (04) der eine Oberfläche mit einer Vielzahl von lichtempfindlichen Pixel (06) aufweist, wobei jeder Pixel (06) in Abhängigkeit des an der entsprechenden Pixelposition empfangenen Lichteingangssignals ein elektrisches Ausgangssignal (07) abgibt, dessen Stärke mit dem Lichteingangssignal korreliert und in einer Auswerteeinheit als Bildinformation auswertbar ist, und wobei zumindest zwei horizontal und/oder vertikal zueinander benachbarten Pixel (06) zu einer logischen Pixeleinheit (P1; P2; P3) zusammengefasst werden, deren Ausgangssignale in der Auswerteeinheit aufeinander bezogen ausgewertet werden, wobei aus dem Durchschnitt der Ausgangssignale (07) der Pixel (06) einer Pixeleinheit (P1; P2; P3) jeweils ein Ausgangssignalmittelwert (08) abgeleitet wird, **dadurch gekennzeichnet, dass** die Ausgangssignale (07) der einzelnen Pixel (06) der Pixeleinheit (P1; P2; P3) mit dem jeweiligen Ausgangssignalmittelwert (08) verglichen werden, dass wenn alle Ausgangssignale (07) der einzelnen Pixel (06) innerhalb einer vorgegebenen Signaltoleranz (09) um den Ausgangssignalmittelwert liegen (08), der Pixeleinheit (P1; P2; P3) zur Auswertung in der Auswerteeinrichtung der Ausgangssignalmittelwert (08) zugeordnet wird, dass wenn zumindest ein Ausgangssignal (07a) eines einzelnen Pixel (06) außerhalb der vorgegebene Signaltoleranz (09) um den Ausgangssignalmittelwert (08) liegt, der Pixeleinheit (P1; P2; P3) zur Auswertung in der Auswerteeinrichtung das Ausgangssignal (07a) mit der größten Differenz zum Ausgangssignalmittelwert (08) zugeordnet wird, dass der Wert der Signaltoleranz (09) aus der bauartbedingten Signalrauschen der einzelnen Pixel (06) abgeleitet wird.

2. Verfahren nach Anspruch 1, **dadurch gekennzeichnet, dass** der Bildsensor (04) als Zeilensensor oder Flächensensor ausgebildet ist.

3. Verfahren nach den Ansprüchen 1 oder 2, **dadurch gekennzeichnet, dass** im Bildsensor (04) jeweils mehrere Pixel mit jeweils unterschiedlicher Farbempfindlichkeit zu Farbpixeleinheiten zusammengefasst sind, wobei mehrere Farbpixeleinheiten wiederum eine Pixeleinheit (P1; P2; P3) bilden.

4. Verfahren nach einem der Ansprüche 1 bis 3, **dadurch gekennzeichnet, dass** die Signaltoleranz (09) als Festwert vorgegeben wird.

5. Verfahren nach einem der Ansprüche 1 bis 4, **dadurch gekennzeichnet, dass** die Signaltoleranz (09) als Funktion in Abhängigkeit des Ausgangssignalmittelwert (08) vorgegeben wird.

6. Verfahren nach einem der Ansprüche 1 bis 5, **dadurch gekennzeichnet, dass** mittels der von den Pixel (06) empfangenen Lichtsignale bei der Inspektion eines Druckerzeugnisses (02) kontrolliert werden.

7. Verfahren nach einem der Ansprüche 1 bis 5, **dadurch gekennzeichnet, dass** mittels der von den Pixel (06) empfangenen Lichtsignale die Farbregelung von Druckerzeugnissen kontrolliert wird.

## Claims

1. Method for signal evaluation of an electronic image sensor (04) that comprises a surface with a multiplicity of light-sensitive pixels (06), each pixel (06), depending on the light input signal received at the corresponding pixel position, emitting an electrical output signal (07), whose strength correlates with the light input signal and can be evaluated as image information in an evaluation unit, and at least two pixels (06) horizontally and/or vertically adjacent to one another being combined to give a logical pixel unit (P1; P2; P3), whose output signals are evaluated relative to one another in the evaluation unit, an output signal mean value (08) being derived from the average of the output signals (07) of the pixels (06) of a pixel unit (P1; P2; P3), **characterized in that** the output signals (07) of the individual pixels (06) of the pixel unit (P1; P2; P3) are compared with the respective output signal mean value (08), **in that** when all output signals (07) of the individual pixels (06) are within a prespecified signal tolerance (09) around the output signal mean value (08), the pixel unit (P1; P2; P3) for evaluation in the evaluation device is assigned the output signal mean value (08), **in that** if at least one output signal (07a) of an individual pixel (06) lies outside the prespecified signal tolerance (09) around the output signal mean value (08), the pixel unit (P1; P2; P3) for evaluation in the evaluation device is assigned the output signal (07a) with the greatest difference to the output signal mean value (08), and **in that** the value of the signal tolerance (09) is derived from the design-related signal noise of the individual pixels (06).

2. Method according to Claim 1, **characterized in that** the image sensor (04) is designed as a line sensor or area sensor.

3. Method according to Claims 1 or 2, **characterized in that** in the image sensor (04) in each case several pixels with in each case different colour sensitivity are combined to give colour pixel units, several colour pixel units in turn forming one pixel unit (P1; P2; P3).

4. Method according to one of Claims 1 to 3, **characterized in that** the signal tolerance (09) is prespecified as a fixed value.

5. Method according to one of Claims 1 to 4, **characterized in that** the signal tolerance (09) is prespecified as a function depending on the output signal mean value (08).

6. Method according to one of Claims 1 to 5, **characterized in that** by means of the light signals received by the pixel (06) a print product (02) is checked during the inspection.

7. Method according to one of Claims 1 to 5, **characterized in that** the colour control of print products is checked by means of the light signals received by the pixel (06).

## Revendications

1. Procédé d'évaluation des signaux d'un capteur d'image (04) électronique, lequel présente une surface avec une pluralité de pixels (06) photosensibles, chaque pixel (06) délivrant un signal de sortie (07) électrique en fonction du signal d'entrée lumineux reçu à l'emplacement de pixel correspondant, dont l'intensité est en corrélation avec le signal d'entrée lumineux et peut être évaluée dans une unité d'évaluation en tant qu'information d'image, et où au moins deux pixels (06) contigus dans le sens horizontal et/ou vertical sont regroupés pour former une unité de pixels (P1 ; P2 ; P3) logique dont les signaux de sortie sont évalués les uns par rapport aux autres dans l'unité d'évaluation, une valeur moyenne (08) de signal de sortie étant déduite de la moyenne des signaux de sortie (07) des pixels (06) d'une unité de pixels (P1 ; P2 ; P3), **caractérisé en ce que** les signaux de sortie (07) des différents pixels (06) de l'unité de pixels (P1 ; P2 ; P3) sont comparés à la valeur moyenne (08) de signal de sortie correspondante, **en ce que**, quand tous les signaux de sortie (07) des différents pixels (06) sont compris à l'intérieur d'une tolérance (09) de signal définie par rapport à la valeur moyenne (08) de signal de sortie, la valeur moyenne (08) du signal de sortie est affectée à l'unité de pixels (P1 ; P2 ; P3) pour évaluation dans le dispositif d'évaluation, **en ce que**, quand au moins un signal de sortie (07a) d'un pixel (06) individuel est extérieur à la tolérance (09) de signal définie par rapport à la valeur moyenne (08) de signal de sortie, le signal de sortie (07a) présentant la différence maximale par rapport à la valeur moyenne (08) de signal de sortie est affecté à l'unité de pixels (P1 ; P2 ; P3) pour évaluation dans le dispositif d'évaluation, et **en ce que** la valeur de la tolérance (09) de signal est déduite du bruit de signal des différents pixels (06), dû au type de construction.

2. Procédé selon la revendication 1, **caractérisé en ce que** le capteur d'image (04) est réalisé comme capteur linéaire ou comme capteur surfacique.

3. Procédé selon la revendication 1 ou la revendication 2, **caractérisé en ce que** dans le capteur d'image (04), plusieurs pixels pourvus de sensibilités chromatiques différentes sont regroupés en unités de pixels chromatiques, plusieurs unités de pixels chromatiques formant quant à elles une unité de pixel (P1 ; P2 ; P3).

4. Procédé selon l'une des revendications 1 à 3, caractérisé la tolérance (09) de signal est définie en tant que valeur fixe.

5. Procédé selon l'une des revendications 1 à 4, **caractérisé en ce que** la tolérance (09) de signal est prescrite comme fonction dépendante de la valeur moyenne (08) de signal de sortie.

6. Procédé selon l'une des revendications 1 à 5, **caractérisé en ce que** le contrôle lors de l'inspection d'un produit d'impression (02) est effectué au moyen des signaux lumineux reçus par les pixels (06).

7. Procédé selon l'une des revendications 1 à 5, **caractérisé en ce que** le réglage chromatique de produits d'impression est contrôlé au moyen des signaux lumineux reçus par les pixels (06).
